# EUROPEAN PATENT SPECIFICATION

(11) **EP 3 372 793 B1**
(45) Date of publication and mention of the grant of the patent: **13.05.2020**
(21) Application number: 18161330.8
(22) Date of filing: 12.03.2018
(51) Int. Cl.: F01D 11/00, F01D 11/02, F01D 11/04, F01D 25/16, F01D 25/18, F01D 25/22

(54) **NON-CONTACTING SEALS FOR GEARED GAS TURBINE ENGINE BEARING COMPARTMENTS**
BERÜHRUNGSLOSE DICHTUNGEN FÜR LAGERKAMMERN EINES VERZAHNTEN GASTURBINENMOTORS
JOINTS SANS CONTACT POUR COMPARTIMENTS DE PALIER DE MOTEUR DE TURBINE À GAZ À ENGRENAGES

(30) Priority: 10.03.2017 US 201715455855
(43) Date of publication of application: 12.09.2018
(73) Proprietor: United Technologies Corporation, Farmington, CT 06032 (US)
(72) Inventor: ULLAH, Rifat, South Windsor, CT Connecticut 06074 (US); PETERS, Robert E., Portland, CT Connecticut 06480 (US)
(74) Representative: Dehns

(56) References cited:
- EP-A1- 2 977 562
- EP-A1- 3 070 316
- US-B1- 8 641 366

## Description

### BACKGROUND

Gas turbine engines are known and, when utilized in aircraft applications, typically include a fan delivering air into a bypass duct and into a core engine flow. The core engine flow passes into a compressor where the air is compressed and then delivered into a combustion section. The air is mixed with fuel in the combustion section and ignited. Products of that combustion pass downstream over turbine rotors, driving them to rotate.

Historically, a fan drive turbine drove the fan through a direct drive, such that they rotated at the same speed. This restricted the speed available for the fan drive turbine, as the fan speed was limited.

More recently, it has been proposed to include a gear reduction between the fan drive turbine and the fan. With this change, the speed of the fan drive turbine can increase.

In gas turbine engines, there are a number of bearing compartments which are desirably sealed. In the prior art, operating at slower speeds, contact seals have been utilized, which directly contacted surfaces rotating with the shaft to seal the bearing compartments. Such contact seals were typically cooled using oil or other lubricant, which was circulated through a cooling system. For geared engines, in which certain components are enabled to rotate faster than corresponding components in non-geared engines, to achieve the same amount of cooling a larger volume of lubricant would be needed. Moreover, a larger volume of lubricant would require a larger holding tank and correspondingly larger cooling system fluid pumping apparatus. All of the larger volume of lubricant, the larger holding tank, and the larger fluid pumping apparatus would add undesirable weight to the engine.

US 8 641 366 B1 discloses a seal arrangement in accordance with the preamble of claim 1, and a method in accordance with the preamble of claim 11.

EP 2 977 562 A1 discloses a bearing compartment sealing system.

### SUMMARY

According to a first aspect of the present invention, there is provided a seal arrangement for a bearing compartment of a gas turbine engine as set forth in claim 1.

In an embodiment according to the previous embodiment, the non-contacting seal is arranged to resist leakage of lubricant outwardly of the at least one bearing compartment and to allow pressurized air to flow from a chamber adjacent the non-contacting seal into the at least one bearing compartment, and a grooved area is formed in one of the faces, with the grooved area having a plurality of circumferentially spaced grooves for generating hydrodynamic lift-off forces and allowing leakage of pressurized air across the faces and into the at least one bearing compartment to resist leakage of lubricant from the at least one bearing compartment.

In a further embodiment of any of the foregoing embodiments, the rotating element is configured to rotate at a velocity greater than or equal to 450 feet per second (137.2 m/s).

In a further embodiment of any of the foregoing embodiments, the non-contacting seal is formed with a plurality of passages configured to allow tapping of additional pressurized air to be delivered to the faces at a location in the proximity of the grooved area for generating hydrostatic lift-off forces.

In a further embodiment of any of the foregoing embodiments, the grooved area is spaced radially from the plurality of passages at the seal face.

In a further embodiment of any of the foregoing embodiments, the rotating element is a shaft rotatable with a rotor having an axial face facing the seal face, and the grooved area is formed in the rotor.

In a further embodiment of any of the foregoing embodiments, the non-contacting seal is a controlled gap carbon seal having a full hoop seal and a metal band shrunk fit onto the non-contacting seal, and positioned in a seal carrier.

In a further embodiment of any of the foregoing embodiments, the rotating element is a shaft rotatable with a rotor having an axial face facing the seal face.

In a further embodiment of any of the foregoing embodiments, the rotating element is configured to rotate at a velocity greater than or equal to 450 feet per second (137.2 m/s).

In a further embodiment of any of the foregoing embodiments, the compartment-seal ratio is between 3:1 to 5:1.

In a further embodiment of any of the foregoing embodiments, the rotating element is configured to rotate at a velocity less than or equal to 600 feet per second (182.9 m/s).

According to a further aspect of the present invention, there is provided a method as set forth in claim 11.

In an embodiment according to the previous embodiment, the rotating element is a shaft rotatable with a rotor having an axial face facing the seal face.

A further embodiment of any of the foregoing embodiments includes communicating air from a fan to a bypass passage and to a compressor section. A bypass ratio is defined as the volume of air passing into the bypass passage compared to the volume of air passing into the compressor section. The bypass ratio is greater than 10 at a cruise condition. The step of rotating includes rotating the rotating element at a velocity greater than or equal to 450 feet per second (137.2 m/s), with the rotating element driving the compressor section.

These and other features may be best understood from the following drawings and specification.

### BRIEF DESCRIPTION OF THE DRAWINGS

Figure 1 schematically shows a gas turbine engine.
Figure 2A schematically shows example locations of bearing compartments.
Figure 2B schematically shows dimensional aspects of the bearing compartments of Figure 2A.
Figure 3A is a first embodiment of a non-contact seal according to the present invention.
Figure 3B shows a second embodiment of a non-contact seal according to the present invention.
Figure 3C shows a third embodiment of a non-contact seal according to the present invention.
Figure 3D shows a fourth embodiment of a non-contact seal assembly according to the present invention.

### DETAILED DESCRIPTION

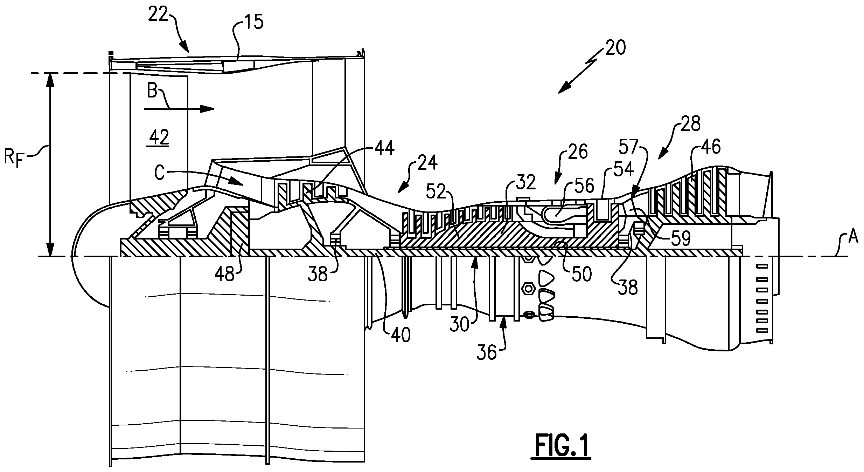

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. A radially outermost location of the fan blades of the fan 42 establishes a radius R_{F} relative to the engine central longitudinal axis A. In some embodiments, radius R_{F} is between about 28 inches (0.711 m) and about 40.5 inches (1.029 m). In an embodiment, the radius R_{F} is about 36.5 inches (0.927 m). The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and geared architecture 48 may be varied. For example, geared architecture 48 may be located aft of combustor section 26 or even aft of turbine section 28, and fan section 22 may be positioned forward or aft of the location of geared architecture 48.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicyclic gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 m). The flight condition of 0.8 Mach and 35,000 ft (10,668 m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = K x 9/5). The "Low corrected fan tip speed" as disclosed herein according to one non-limiting embodiment is less than about 1150 ft / second (350.5 m/s).

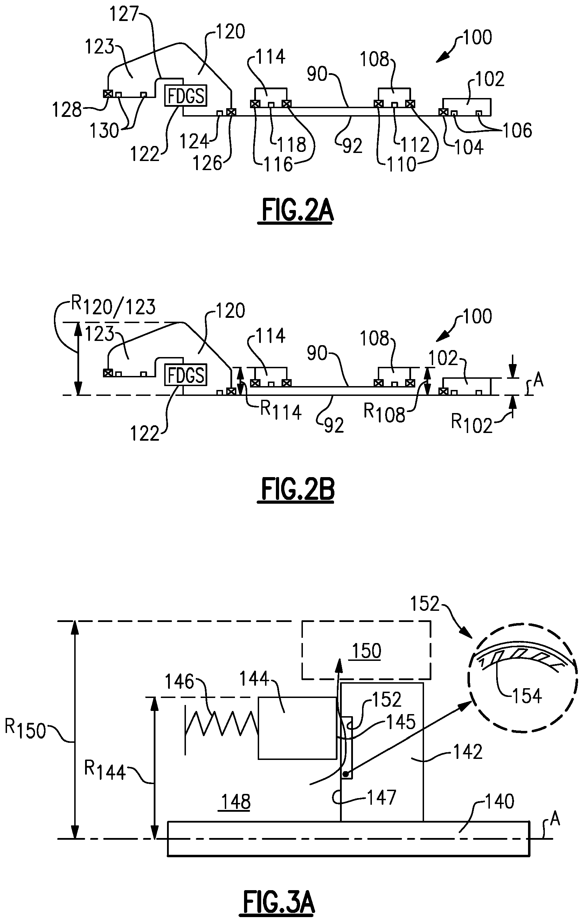

Figure 2A shows an embodiment of an arrangement of bearing compartments 100 associated with the gas turbine engine, such as the gas turbine engine 20 illustrated in Figure 1. As shown, a bearing compartment 102 is associated with a low speed shaft 92 at a location associated with the low pressure turbine. Bearings 106 are shown schematically as is a seal 104.

A bearing compartment 108 is associated with a high speed rotor 90 and at the high pressure turbine of Figure 1. Bearing compartment 108 includes seals 110 at each axial end and a central bearing 112.

Another bearing compartment 114 is also associated with the high speed rotor 90 and the high pressure compressor and includes a bearing 118 and seals 116.

Finally, a bearing compartment 120 is associated with a fan drive gear system 122 at location 120 and with and the fan at location 123. Seals 126 and 128 mechanically seal the axial ends of the bearing compartment 120 and are associated with the fan rotor 127 and the low speed rotor 92. The seals 126, 128 are also respectively associated with the bearings 124 and 130 that are positioned within the bearing compartment 120/123.

Referring to Figure 2B, the bearing compartments 102, 108, 114, 120/123, establish a dimensional relationship with respect to the engine central longitudinal axis A. A radially outermost location of bearing compartments 102, 108, 114, 120/123 establish corresponding radii R₁₀₂, R₁₀₈, R₁₁₄ and R_{120/123}.

Utilizing the seal arrangements disclosed herein, the relative sizes of the bearing compartments 102, 108, 114 and 120/123 can be reduced to provide for a more compact core engine arrangement, which may be utilized with a relatively high bypass ratio. In some embodiments, radii R_{120, 123} and R₁₁₄ establish a compartment ratio that is between about 1:1 to about 2:1. In embodiments, radii R_{120, 123} and R₁₀₂ establish a compartment ratio that is between about 2:1 to about 3:1. In some embodiments, radii R₁₀₈ and R₁₀₂ establish a compartment ratio that is between about 1:1 to about 2:1. For the purposes of this disclosure, the term "about" is relative to the number of significant digits unless otherwise noted.

The sizes of the bearing compartments 102, 108, 114 and 120/123 relative to the fan 42 can also be reduced. In embodiments, radii R_{F} and radii R_{120/123} establish a fan-compartment ratio that is greater than or equal to about 2:1, such as between about 2.5:1 and about 5:1. In one embodiment, the fan-compartment ratio is about 3:1. In embodiments, radii R_{F} and radii R₁₁₄ establish a fan-compartment ratio that greater than or equal to about 4:1. In an embodiment, radii R_{F} and radii R₁₁₄ establish a fan-compartment ratio that is about 5:1. In embodiments, radii R_{F} and radii R₁₀₈ establish a fan-compartment ratio that greater than or equal to about 8:1, and less than or equal to about 12:1. In an embodiment, radii R_{F} and radii R₁₀₈ establish a fan-compartment ratio that is about 10:1. In embodiments, radii R_{F} and radii R₁₀₂ establish a fan-compartment ratio that is greater than or equal to about 12:1, and less than or equal to about 18:1. In an embodiment, radii R_{F} and radii R₁₀₂ establish a fan-compartment ratio that is about 15:1.

There are challenges with sealing the bearing compartments in a geared turbofan engine. Accordingly, various embodiments disclosed herein relate to the use of non-contacting seals such as lift-off seals at any one or more of the locations of the seals shown in Figure 2A or in any other bearing compartment on a gas turbine engine. In some embodiments, the seals may be lift-off seals and, more particularly, may be carbon lift-off seals. Of course, in other embodiments other non-contacting seals, including other lift-off seals may be used.

Thus, as shown in Figure 3A, a shaft 140, which could be any rotating shaft in a gas turbine engine, has a mating rotor 142. An axial face 147 of this mating rotor 142 is sealed relative to a face 145 of a seal 144. The faces 145 and 147 face each other to form a mechanical seal. The seal 144 may be a non-contact seal such as a carbon seal lift-off seal. The interface between faces 145 and 147 experiences high velocities, especially when compared to the prior art. The high velocity is a combination of a high rotational speed of the shaft 140 and a relatively large diameter for the seal 144. Velocities greater than or equal to about 450 feet / second (137.16 meters / second) may be seen.

In the Figure 3A embodiment seal 144, a set of shallow grooves 152 is provided by cutting into the face 147 of the rotor 142, as shown at circumferentially spaced grooves 154. A spring 146 biases the seal 144 toward the face 147. A higher pressure air is available in a chamber 148, which is on an opposed side of the seal 144 from the bearing compartment 150. The bearing compartment 150 is at a lower pressure than the chamber 148, and this higher pressure air passes through the grooved area 152, such that the air flow levitates (lifts-off) the sealing surface 145 of the non-rotating seal 144 from the sealing surface 147 of the rotor 142. The levitation is a result of hydrodynamic lifting force as the air passes into the bearing compartment 150, preventing oil from escaping the bearing compartment 150.

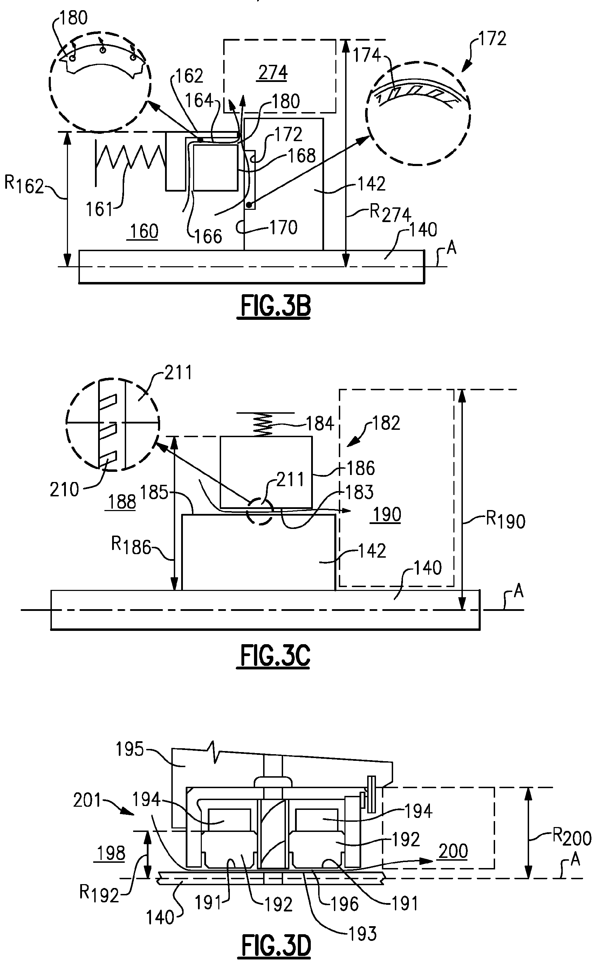

Another embodiment is illustrated in Figure 3B. Figure 3B provides the mechanical sealing between face 168 of a non-rotating seal 162 and a face 170 of a rotor in a manner somewhat similar to the Figure 3A embodiment. There is a grooved area 172 having circumferentially spaced grooves 174 with the features as described for the first embodiment that generate hydrodynamic lifting force as the gas passes from a high pressure chamber 160 into the bearing compartment 274. Furthermore, the non-rotating seal 162 has an inlet 166, a passage 164, and an outlet 180 which delivers additional high pressure air generating hydrostatic lifting forces at a radial location in the proximity of the grooved area 172, thereby providing a stronger and more stable lift-off seal compared to the first embodiment. As shown, there is a plurality of circumferentially spaced outlets 180. The non-rotating seal 162, which is biased toward the rotor face 170 by a spring 161, may be a carbon lift-off seal.

Figure 3C shows another embodiment 182, wherein the seal 186 has a plurality of circumferentially segmented members biased by spring 184 toward a face 185 of a rotor 142 rotating with the shaft 140. Seal 186 has a radially inwardly facing face 183 providing the seal face with the mating face 185. One of the sealing faces, either 183 or 185, has a set of shallow, circumferentially spaced grooves 210 in a grooved area 211, somewhat similar to those described in the earlier embodiments that generate a hydrodynamic force that levitates (lifts-off) the non-rotating sealing surface 183 from the rotating mating surface 185 when the high pressure chamber 188 delivers pressurized air across the seal 186 to prevent leakage of oil from the bearing compartment 190.

Figure 3D shows an embodiment of a controlled gap non-contacting seal assembly 201. The shaft 140 has an outer surface spaced by a small gap 196 from two carbon seals 192. The gap is controlled by design, typically by sizing the sealing diameters of the seals 192 and the rotor 142 such that a small gap is maintained under all conditions. The shaft outer surface 193 and a radially inward facing surfaces 191 of the seals 192 provide the seal faces. In one embodiment, the carbon seals 192 are full hoop members extending around the entire circumference of the shaft 140. A metal band 194 is shrunk fit onto the seal 192. A carrier 195 mounts the seals 192. A high pressure chamber 198 is spaced from the bearing compartment 200, such that high pressure air passes through the gap 196 to prevent the leakage of lubricant.

The seal arrangements disclosed herein can be utilized to reduce the relative sizes of the bearing compartments to provide for a more compact core engine arrangement. The seals 144, 162, 186, 192 establish a dimensional relationship with engine central longitudinal axis A. A radially outermost location of seals 144, 162, 186, 192 establish corresponding radii R₁₄₄, R₁₆₂, R₁₈₆ and R₁₉₂ with respect to engine axis A (shown in Figures 3A-3D, respectively). For the purposes of this disclosure, the radially outermost location of each seal 144, 162, 186, 192 is measured at an outermost position that the seal 144, 162, 186, 192 is permitted to move relative to the engine central longitudinal axis A during normal operation of the engine 20. A radially outermost location of the bearing compartments 150, 274, 190, 200 establish corresponding radii R₁₅₀, R₂₇₄, R₁₉₀ and R₂₀₀ with respect to engine axis A (shown in Figures 3A-3D, respectively). For the purposes of this disclosure, the radially outermost location of each bearing compartment 150, 274, 190, 200 is measured at an inner surface of the cavity of the bearing compartment 150, 274, 190, 200 housing the respective bearing(s).

In embodiments, radii R_{150/274/190/200} and R_{144/162/186/192} establish a compartment-seal ratio that is less than or equal to about 6:1. In some embodiments, the compartment-seal ratio is between about 3:1 and about 5:1.

As previously discussed, the interface between the shaft or rotor and seal(s) may operate at relatively high velocities. In embodiments, the interface between the faces of the shaft 140 or rotor 142 and seal(s) 144/162/186/192 is configured to operate at relative velocities greater than or equal to about 450 feet/second (137.2 m/s). In some embodiments, the interface operates at relative velocities less than or equal to about 600 feet/second (182.9 m/s), and more narrowly less than or equal to about 550 feet/second (167.6 m/s). In embodiments, the shaft 140 corresponds to the high speed rotor 90 (Figure 2A).

In other embodiments, the interface between the faces of the shaft 140 or rotor 142 and seal(s) 144/162/186/192 is configured to operate at relative velocities less than or equal to about 450 feet/second (137.2 m/s), such as between about 400 feet/second (121.9 m/s) to about 450 feet/second (137.2 m/s). In embodiments, the shaft 140 corresponds to the low speed rotor 92 (Figure 2A). In other embodiments, the shaft 140 corresponds to the fan rotor 127 (Figure 2A). In some embodiments, the interface between the faces of the shaft 140 or rotor 142 and seal(s) 144/162/186/192 is configured to operate at relative velocities between about 200 to about 400 feet/ second (about 61-122 m/s).

In some embodiments, a velocity of the high speed rotor 90 and the low speed rotor 92 establish a ratio that is between about 1:1 to about 2:1. In embodiments, a velocity of the high speed rotor 90 and the fan rotor 127 establish a ratio that is between about 5:2 to about 3:1, with the fan rotor 127 driven by the fan drive gear system 122.

All of the disclosed embodiments reduce the friction between the seal and the rotating components. This reduces heat generation due to friction, increases the durability of the seals, minimizes loss of oil, and increases the efficiency in fuel consumption of the overall engine. Moreover, as a result of the reduction in friction, less lubricant can be used, thereby also reducing the size of the applicable fluid storage tank (not shown) and the applicable cooling system fluid pumping apparatus (also not shown). Accordingly, the overall weight of the engine may be greatly reduced, thereby increasing the engine's fuel efficiency.

The disclosed embodiments may be useful at any bearing compartment in a gas turbine engine. Although shafts are shown supported by the bearings, the disclosure would extend to other rotating elements supported by a bearing.

Although various embodiments of this invention have been disclosed, a worker of ordinary skill in this art would recognize that certain modifications would come within the scope of this invention. For that reason, the following claims should be studied to determine the scope and content of this invention.

## Claims

1. A seal arrangement for a bearing compartment (150; 274; 190; 200) of a gas turbine engine (20) comprising:
a rotating element (142, 140) and at least one bearing compartment (150; 274; 190; 200) including a bearing for supporting said rotating element (142, 140), said rotating element (142, 140) rotatable about an axis (A), wherein said at least one bearing compartment (150, 274; 190; 200) has a first seal (144; 162; 186; 192) and a second seal (144; 162; 186; 192) each associated with a corresponding one of two opposed axial ends, on either axial side of said bearing relative to said axis (A), at least one of said first seal (144; 162; 186; 192) and said second seal (144; 162; 186; 192) being a non-contacting seal (144; 162; 186; 192) having a seal face (145; 168; 183; 191) facing a rotating face (147; 170; 185; 193) of said rotating element (142, 140), a radially outermost location of said bearing compartment (150; 274; 190; 200) defines a compartment radius (R₁₅₀; R₂₇₄; R₁₉₀; R₂₀₀) with respect to said axis (A), and a radial outermost location of said non-contacting seal (144; 162; 186; 192) establishes a seal radius (R₁₄₄; R₁₆₂; R₁₈₆; R₁₉₂) with respect to the engine axis (A), **characterised in that**:
a compartment-seal ratio defined by said compartment radius (R₁₅₀; R₂₇₄; R₁₉₀; R₂₀₀) to said seal radius (R₁₄₄; R₁₆₂; R₁₈₆; R₁₉₂) is less than or equal to 6:1.

2. The seal arrangement as set forth in claim 1, wherein said non-contacting seal (144; 162; 186) is arranged to resist leakage of lubricant outwardly of said at least one bearing compartment (150; 274; 190) and to allow pressurized air to flow from a chamber (148; 160; 188) adjacent said non-contacting seal (144; 162; 186) into said at least one bearing compartment (150; 274; 190), and a grooved area (152; 172; 211) is formed in one of said faces (145; 168; 183; 147; 170; 185), with said grooved area (152; 172; 211) having a plurality of circumferentially spaced grooves (154; 174; 210) for generating hydrodynamic lift-off forces and allowing leakage of pressurized air across said faces (145...185) and into said at least one bearing compartment (150; 274; 190) to resist leakage of lubricant from said at least one bearing compartment (150; 274; 190).

3. The seal arrangement as set forth in claim 2, wherein said non-contacting seal (144) is formed with a plurality of passages (164) configured to allow tapping of additional pressurized air to be delivered to at least one of said faces (168; 170) at a location in the proximity of said grooved area (172) for generating hydrostatic lift-off forces.

4. The seal arrangement as set forth in claim 3, wherein said grooved area (172) is spaced radially from said plurality of passages (164) at said seal face (168).

5. The seal arrangement as set forth in any of claims 2 to 4, wherein said rotating element (142, 140) is a shaft (140) rotatable with a rotor (142) having an axial face (147; 170) facing said seal face (145; 168).

6. The seal arrangement as set forth in claim 5, wherein said grooved area (152; 172) is formed in said rotor (142).

7. The seal arrangement as set forth in any preceding claim, wherein said non-contacting seal (192) is a controlled gap carbon seal (192) having a full hoop seal and a metal band shrunk fit onto said non-contacting seal (192), and positioned in a seal carrier (195).

8. The seal arrangement as set forth in any preceding claim, wherein said compartment-seal ratio is between 3:1 and 5:1.

9. The seal arrangement as set forth in any preceding claim, configured such that the relative velocity between the seal face (145; 168; 183; 191) and the rotating face (147; 170; 185; 193) is greater than or equal to 450 feet per second (137.2 m/s).

10. The seal arrangement as set forth in any preceding claim, configured such that the relative velocity between the seal face (145; 168; 183; 191) and the rotating face (147; 170; 185; 193) is less than or equal to 600 feet per second (182.9 m/s).

11. A method of operating a gas turbine engine (20), the method comprising the steps of:
arranging a bearing within a bearing compartment (150; 274; 190; 200) to support a rotating element (142, 140), said rotating element (142, 140) defining a rotating face (147; 170; 185; 193), said bearing compartment (150; 274; 190; 200) having a first seal (144; 162; 186; 192) and a second seal (144; 162; 186; 192) each associated with a corresponding one of two opposed axial ends relative to an engine axis (A), on either axial side of said bearing;
rotating said rotating face (147; 170; 185; 193) relative to at least one of said first seal (144; 162; 186; 192) and said second seal (144; 162; 186; 192); and
sealing said bearing compartment (150; 274; 190; 200) with said first seal (144...192) and said second seal (144...192), at least one of said first seal (144...192) and said second seal (144...192) being a non-contacting seal (144...192) configured to resist leakage of lubricant outwardly of said bearing compartment (150...200) and to allow air to flow from a chamber (148; 160; 188; 198) adjacent said non-contacting seal (144...192) and into said bearing compartment (150...200), said non-contacting seal (144...200) defining a seal face (145; 168; 183; 191) facing said rotating face (147...193), wherein a radially outermost location of said bearing compartment (150...200) defines a compartment radius (R₁₅₀; R₂₇₄; R₁₉₀; R₂₀₀) with respect to said engine axis (A), a radial outermost location of said non-contacting seal (144...192) establishes a seal radius (R₁₄₄; R₁₆₂; R₁₈₆; R₁₉₂) with respect to the engine axis (A), **characterised in that**:
a ratio of said compartment radius (R₁₅₀... R₂₀₀) to said seal radius (R₁₄₄... R₁₉₂) is less than or equal to 6:1.

12. The method as set forth in claim 11, wherein said rotating element (142, 140) is a shaft (140) rotatable with a rotor (142) having an axial face (147; 170) facing said seal face (145; 168).

13. The method as set forth in claim 11 or 12, comprising communicating air from a fan (42) to a bypass passage (B) and to a compressor section (24), wherein a bypass ratio, defined as the volume of air passing into said bypass passage (B) compared to the volume of air passing into said compressor section (24), is greater than 10 at a cruise condition, and wherein said step of rotating comprises rotating said rotating face (147; 170; 185; 193) relative to said seal face (145; 168; 183; 191) at a velocity greater than or equal to 450 feet per second (137.2 m/s), with said rotating element (142, 140) driving said compressor section (24).

## Patentansprüche

1. Dichtungsanordnung für eine Lagerkammer (150; 274; 190; 200) eines Gasturbinentriebwerks (20), Folgendes umfassend:
ein rotierendes Element (142, 140) und mindestens eine Lagerkammer (150; 274; 190; 200), die ein Lager zum Stützen des rotierenden Elements (142, 140) beinhaltet, wobei das rotierende Element (142, 140) um eine Achse (A) rotierbar ist, wobei die mindestens eine Lagerkammer (150, 274; 190; 200) eine erste Dichtung (144; 162; 186; 192) und eine zweite Dichtung (144; 162; 186; 192) aufweist, von denen jede einem entsprechenden von zwei gegenüberliegenden axialen Enden auf jeder axialen Seite des Lagers relativ zu der Achse (A) zugeordnet ist, wobei mindestens eine von der ersten Dichtung (144; 162; 186; 192) und der zweiten Dichtung (144; 162; 186; 192) eine berührungslose Dichtung (144; 162; 186; 192) ist, die eine Dichtungsfläche (145; 168; 183; 191) aufweist, die in Richtung einer rotierende Fläche (147; 170; 185; 193) des rotierenden Elements (142, 140) zeigt, wobei eine radial äußerste Stelle der Lagerkammer (150; 274; 190; 200) einen Kammerradius (R₁₅₀; R₂₇₄; R₁₉₀; R₂₀₀) in Bezug auf die Achse (A) definiert, und eine radial äußerste Stelle der berührungslosen Dichtung (144; 162; 186; 192) einen Dichtungsradius (R₁₄₄; R₁₆₂; R₁₈₆; R₁₉₂) in Bezug auf die Triebwerksachse (A) festlegt, **dadurch gekennzeichnet, dass**:
ein Kammer-Dichtungs-Verhältnis, das durch den Kammerradius (R₁₅₀; R₂₇₄; R₁₉₀; R₂₀₀) und den Dichtungsradius (R₁₄₄; R₁₆₂; R₁₈₆; R₁₉₂) definiert ist, 6:1 oder weniger beträgt.

2. Dichtungsanordnung nach Anspruch 1, wobei die berührungslose Dichtung (144; 162; 186) so angeordnet ist, dass sie einem Schmiermittelaustritt außerhalb der mindestens einen Lagerkammer (150; 274; 190) widersteht und zulässt, dass Druckluft von einer Kammer (148; 160; 188), die an die berührungslose Dichtung (144; 162; 186) angrenzt, in die mindestens eine Lagerkammer (150; 274; 190) strömt, und in einer der Flächen (145; 168; 183; 147; 170; 185) ein gerillter Bereich (152; 172; 211) gebildet ist, wobei der gerillte Bereich (152; 172; 211) eine Vielzahl von in Umfangsrichtung beabstandeten Rillen (154; 174; 210) zum Erzeugen hydrodynamischer Abhebekräfte und zum Zulassen, dass Druckluft über die Flächen (145...185) und in die mindestens eine Lagerkammer (150; 274; 190) austritt, aufweist, um einem Schmiermittelaustritt von der mindestens einen Lagerkammer (150; 274; 190) zu widerstehen.

3. Dichtungsanordnung nach Anspruch 2, wobei die berührungslose Dichtung (144) mit einer Vielzahl von Kanälen (164) gebildet ist, die dazu konfiguriert sind, ein Anzapfen zusätzlicher Druckluft zuzulassen, die an mindestens eine der Flächen (168; 170) an einer Stelle in der Nähe des gerillten Bereichs (172) geleitet wird, um hydrostatische Abhebekräfte zu erzeugen.

4. Dichtungsanordnung nach Anspruch 3, wobei der gerillte Bereich (172) radial von der Vielzahl von Kanälen (164) an der Dichtungsfläche (168) beabstandet ist.

5. Dichtungsanordnung nach einem der Ansprüche 2 bis 4, wobei das rotierende Element (142, 140) eine Welle (140) ist, die mit einem Rotor (142) rotierbar ist, der eine axiale Fläche (147; 170) aufweist, die in Richtung der Dichtungsfläche (145; 168) zeigt.

6. Dichtungsanordnung nach Anspruch 5, wobei der gerillte Bereich (152; 172) in einem Rotor (142) gebildet ist.

7. Dichtungsanordnung nach einem der vorhergehenden Ansprüche, wobei die berührungslose Dichtung (192) eine Kohledichtung (192) mit gesteuertem Spalt ist, die eine ganze Ringdichtung und ein Metallband aufweist, das auf die berührungslose Dichtung (192) aufgeschrumpft ist, und in einem Dichtungsträger (195) positioniert ist.

8. Dichtungsanordnung nach einem der vorhergehenden Ansprüche, wobei das Kammer-Dichtungs-Verhältnis zwischen 3:1 und 5:1 liegt.

9. Dichtungsanordnung nach einem der vorhergehenden Ansprüche, die so konfiguriert ist, dass die relative Geschwindigkeit zwischen der Dichtungsfläche (145; 168; 183; 191) und der rotierenden Seite (147; 170; 185; 193) größer oder gleich 450 Fuß pro Sekunde (137,2 m/s) ist.

10. Dichtungsanordnung nach einem der vorhergehenden Ansprüche, so konfiguriert, dass die relative Geschwindigkeit zwischen der Dichtungsfläche (145; 168; 183; 191) und der rotierenden Fläche (147; 170; 185; 193) kleiner oder gleich 600 Fuß pro Sekunde (182,9 m/s) ist.

11. Verfahren zum Betreiben eines Gasturbinentriebwerks (20), wobei das Verfahren folgende Schritte umfasst:
Anordnen eines Lagers innerhalb einer Lagerkammer (150; 274; 190; 200) um ein rotierendes Element (142, 140) zu stützen, wobei das rotierende Element (142, 140) eine rotierende Fläche (147; 170; 185; 193) definiert, die Lagerkammer (150; 274; 190; 200) eine erste Dichtung (144; 162; 186; 192) und eine zweite Dichtung (144; 162; 186; 192) umfasst, von denen jede einem entsprechenden von zwei gegenüberliegenden axialen Enden in Bezug auf eine Triebwerksachse (A) auf jeder axialen Seite des Lagers zugeordnet ist;
Rotieren der rotierenden Fläche (147; 170; 185; 193) in Bezug auf mindestens eine von der ersten Dichtung (144; 162; 186; 192) und der zweiten Dichtung (144; 162; 186; 192); und
Abdichten der Lagerkammer (150; 274; 190; 200) mit der ersten Dichtung (144...192) und der zweiten Dichtung (144...192), wobei mindestens eine von der ersten Dichtung (144...192) und der zweiten Dichtung (144...192) eine berührungslose Dichtung (144...192) ist, die dazu konfiguriert ist, einem Schmiermittelaustritt außerhalb der Lagerkammer (150...200) zu widerstehen und zuzulassen, dass Druckluft von einer Kammer (148; 160; 188; 198), die an die berührungslose Dichtung (144...192) angrenzt, in die Lagerkammer (150...200) strömt, wobei die berührungslose Dichtung (144...200) eine Dichtungsfläche (145; 168; 183; 191) definiert, die in Richtung der rotierenden Fläche (147...193) zeigt, wobei eine radial äußerste Stelle der Lagerkammer (150...200) einen Kammerradius (R₁₅₀; R₂₇₄; R₁₉₀; R₂₀₀) in Bezug auf die Triebwerksachse (A) definiert, wobei eine radial äußerste Stelle der berührungslosen Dichtung (144...192) einen Dichtungsradius (R₁₄₄; R₁₆₂; R₁₈₆; R₁₉₂) in Bezug auf die Triebwerksachse (A) festlegt, **dadurch gekennzeichnet, dass**:
ein Verhältnis von dem Kammerradius (R₁₅₀...R₂₀₀) zu dem Dichtungsradius (R₁₄₄...R₁₉₂) 6:1 oder weniger beträgt.

12. Verfahren nach Anspruch 11, wobei das rotierende Element (142, 140) eine Welle (140) ist, die mit einem Rotor (142) rotierbar ist und eine axiale Fläche (147; 170) aufweist, die in Richtung der Dichtungsfläche (145; 168) zeigt.

13. Verfahren nach Anspruch 11 oder 12, eine Luftverbindung von einem Gebläse (42) zu einem Bypasskanal (B) und zu einem Kompressorabschnitt (24) umfassend, wobei ein Bypassverhältnis, das als das Luftvolumen, das in den Bypasskanal (B) strömt, verglichen mit dem Luftvolumen, das in den Kompressorabschnitt (24) strömt, definiert ist, zu einer Reiseflugbedingung größer als 10 ist, und wobei der Schritt des Rotierens ein Rotieren der rotierenden Fläche (147; 170; 185; 193) relativ zu der Dichtungsfläche (145; 168; 183; 191) mit einer Geschwindigkeit umfasst, die größer oder gleich 450 Fuß pro Sekunde (137,2 m/s) ist, wobei das rotierende Element (142, 140) den Kompressorabschnitt (24) antreibt.

## Revendications

1. Agencement de joint pour un compartiment de palier (150 ; 274 ; 190 ; 200) d'un moteur de turbine à gaz (20) comprenant :
un élément rotatif (142, 140) et au moins un compartiment de palier (150 ; 274 ; 190 ; 200) comportant un palier pour supporter ledit élément rotatif (142, 140), ledit élément rotatif (142, 140) pouvant tourner autour d'un axe (A), dans lequel ledit au moins un compartiment de palier (150, 274 ; 190; 200) a un premier joint (144; 162; 186; 192) et un second joint (144 ; 162 ; 186; 192) associés chacun à une extrémité correspondante des deux extrémités axiales opposées, de chaque côté axial dudit palier par rapport audit axe (A), au moins l'un dudit premier joint (144 ; 162 ; 186 ; 192) et dudit second joint (144 ; 162 ; 186 ; 192) étant un joint sans contact (144 ; 162 ; 186 ; 192) ayant une face de joint (145 ; 168 ; 183 ; 191) faisant face à une face rotative (147 ; 170 ; 185 ; 193) dudit élément rotatif (142, 140), un emplacement radialement le plus à l'extérieur dudit compartiment de palier (150 ; 274 ; 190 ; 200) définit un rayon de compartiment (R₁₅₀; R₂₇₄; R₁₉₀; R₂₀₀) par rapport audit axe (A), et un emplacement radial le plus à l'extérieur dudit joint sans contact (144 ; 162 ; 186 ; 192) établit un rayon de joint (R₁₄₄; R₁₆₂; R₁₈₆ ; R₁₉₂) par rapport à l'axe de moteur (A), **caractérisé en ce que** :
un rapport compartiment-joint défini par ledit rayon de compartiment (R₁₅₀; R₂₇₄; R₁₉₀; R₂₀₀) sur ledit rayon de joint (R₁₄₄; R₁₆₂; R₁₈₆ ; R₁₉₂) est inférieur ou égal à 6:1.

2. Agencement de joint selon la revendication 1, dans lequel ledit joint sans contact (144 ; 162 ; 186) est agencé pour résister à une fuite de lubrifiant vers l'extérieur dudit au moins un compartiment de palier (150 ; 274 ; 190) et pour permettre à de l'air sous pression de circuler d'une chambre (148 ; 160 ; 188) adjacente audit joint sans contact (144 ; 162 ; 186) dans ledit au moins un compartiment de palier (150 ; 274 ; 190), et une zone rainurée (152 ; 172 ; 211) est formée dans l'une desdites faces (145 ; 168 ; 183 ; 147 ; 170 ; 185), ladite zone rainurée (152 ; 172 ; 211) ayant une pluralité de rainures espacées circonférentiellement (154 ; 174 ; 210) pour générer des forces de décollage hydrodynamiques et permettant une fuite d'air sous pression à travers lesdites faces (145...185) et dans ledit au moins un compartiment de palier (150 ; 274 ; 190) pour résister à une fuite de lubrifiant provenant dudit au moins un compartiment de palier (150 ; 274 ; 190) .

3. Agencement de joint selon la revendication 2, dans lequel ledit joint sans contact (144) est formé avec une pluralité de passages (164) configurés pour permettre le prélèvement d'air sous pression supplémentaire à acheminer jusqu'à au moins l'une desdites faces (168 ; 170) à un emplacement à proximité de ladite zone rainurée (172) pour générer des forces de décollage hydrostatiques.

4. Agencement de joint selon la revendication 3, dans lequel ladite zone rainurée (172) est espacée radialement de ladite pluralité de passages (164) au niveau de ladite face de joint (168) .

5. Agencement de joint selon l'une quelconque des revendications 2 à 4, dans lequel ledit élément rotatif (142, 140) est un arbre (140) pouvant tourner avec un rotor (142) ayant une face axiale (147 ; 170) faisant face à ladite face d'étanchéité (145 ; 168).

6. Agencement de joint selon la revendication 5, dans lequel ladite zone rainurée (152 ; 172) est formée dans ledit rotor (142) .

7. Agencement de joint selon une quelconque revendication précédente, dans lequel ledit joint sans contact (192) est un joint en carbone à interstice contrôlé (192) ayant un joint en cercle complet et une bande métallique ajustée de manière serrée sur ledit joint sans contact (192), et positionné dans un porte-joint (195).

8. Agencement de joint selon une quelconque revendication précédente, dans lequel ledit rapport compartiment-joint est compris entre 3:1 et 5:1.

9. Agencement de joint selon une quelconque revendication précédente, configuré de sorte que la vitesse relative entre la face de joint (145 ; 168 ; 183 ; 191) et la face rotative (147 ; 170 ; 185 ; 193) est supérieure ou égale à 137,2 m/s (450 pieds par seconde).

10. Agencement de joint selon une quelconque revendication précédente, configuré de sorte que la vitesse relative entre la face de joint (145 ; 168 ; 183 ; 191) et la face rotative (147 ; 170 ; 185 ; 193) est inférieure ou égale à 182,9 m/s (600 pieds par seconde).

11. Procédé de fonctionnement d'un moteur de turbine à gaz (20), le procédé comprenant les étapes :
d'agencement d'un palier à l'intérieur d'un compartiment de palier (150 ; 274 ; 190 ; 200) pour supporter un élément rotatif (142, 140), ledit élément rotatif (142, 140) définissant une face rotative (147 ; 170 ; 185 ; 193), ledit compartiment de palier (150 ; 274 ; 190 ; 200) ayant un premier joint (144 ; 162 ; 186 ; 192) et un second joint (144 ; 162 ; 186 ; 192) associés chacun à l'une correspondante des deux extrémités axiales opposées, sur chaque côté axial dudit palier ;
de rotation de ladite face rotative (147 ; 170 ; 185 ; 193) par rapport à au moins l'un dudit premier joint (144 ; 162 ; 186 ; 192) et dudit second joint (144 ; 162 ; 186 ; 192) ; et
de scellement dudit compartiment de palier (150 ; 274 ; 190 ; 200) avec ledit premier joint (144...192) et ledit second joint (144...192), au moins l'un dudit premier joint (144...192) et dudit second joint (144...192) étant un joint sans contact (144...192) configuré pour résister à une fuite de lubrifiant vers l'extérieur dudit compartiment de palier (150...200) et pour permettre à l'air de circuler depuis une chambre (148 ; 160 ; 188 ; 198) adjacente audit joint sans contact (144...192) et dans ledit compartiment de palier (150...200), ledit joint sans contact (144...200) définissant une face de joint (145 ; 168 ; 183 ; 191) faisant face à ladite face rotative (147...193), dans lequel un emplacement radialement le plus à l'extérieur dudit compartiment de palier (150...200) définit un rayon de compartiment (R₁₅₀; R₂₇₄; R₁₉₀; R₂₀₀) par rapport audit axe de moteur (A), un emplacement radial le plus à l'extérieur dudit joint sans contact (144...192) établit un rayon de joint (R₁₄₄; R₁₆₂; R₁₈₆ ; R₁₉₂) par rapport à l'axe du moteur (A), **caractérisé en ce que** :
un rapport dudit rayon de compartiment (R₁₅₀... R₂₀₀) sur ledit rayon de joint (R₁₄₄... R₁₉₂) est inférieur ou égal à 6:1.

12. Procédé selon la revendication 11, dans lequel ledit élément rotatif (142, 140) est un arbre (140) pouvant tourner avec un rotor (142) ayant une face axiale (147 ; 170) faisant face à ladite face d'étanchéité (145 ; 168).

13. Procédé selon la revendication 11 ou 12, comprenant la communication d'air d'une soufflante (42) à un passage de dérivation (B) et à une section de compresseur (24), dans lequel un rapport de dérivation, défini comme le volume d'air passant dans ledit le passage de dérivation (B) comparé au volume d'air passant dans ladite section de compresseur (24), est supérieur à 10 dans une condition de croisière, et dans lequel ladite étape de rotation comprend la rotation de ladite face rotative (147 ;
170 ; 185 ; 193) par rapport à ladite face de joint (145 ; 168 ; 183; 191) à une vitesse supérieure ou égale à 137,2 m/s (450 pieds par seconde), ledit élément rotatif (142, 140) entraînant ladite section de compresseur (24).
